Europäisches Patentamt

(19) European Patent Office

Office européen des brevets

(11) Veröffentlichungsnummer: **0 195 420**

**A2**

# (12) EUROPÄISCHE PATENTANMELDUNG

(21) Anmeldenummer: **86103677.0**

(51) Int. Cl.⁴: **G 01 N 15/14**

(22) Anmeldetag: **18.03.86**

(30) Priorität: **22.03.85 DE 3510363**

(43) Veröffentlichungstag der Anmeldung:
**24.09.86 Patentblatt 86/39**

(84) Benannte Vertragsstaaten:
**AT BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Nitzschmann, Robert E., Dr.**
**Anselm-Feuerbach-Strasse 6**
**D-6710 Frankenthal(DE)**

(72) Erfinder: **Hauffe, Werner, Dr.**
**Dackenheimer Strasse 3**
**D-6700 Ludwigshafen(DE)**

(72) Erfinder: **Scholz, Norbert**
**Ahornweg 12**
**D-6733 Hassloch(DE)**

(72) Erfinder: **Wambsganss, Rolf**
**Glacisstrasse 18**
**D-6740 Landau(DE)**

(72) Erfinder: **Reinhardt, Klemens**
**Seebacher Strasse 37**
**D-6702 Bad Duerkheim(DE)**

(54) **Messanordnung zur Partikelgrössenanalyse.**

(57) Aus einem Produktstrom (2) von Festkörperteilchen werden kontinuierlich oder schrittweise die zu untersuchenden Partikel einer Meßzelle zugeführt. Die Partikel (15) werden in einem Meßkanal (10) im freien Fall nacheinander an einem optoelektronischen Sensor (12), beispielsweise einem CCD-Zeilensensor, vorbeigeführt, der das beispielsweise durch eine Lichtquelle (13) erzeugte Schattenbild eines Partikels abtastet. In einer mit dem Sensor in Verbindung stehenden Auswerteeinrichtung (16) werden die Bildsignale nach Größe und Größenverteilung analysiert und ausgewertet.

Croydon Printing Company Ltd

## Meßanordnung zur Partikelgrößenanalyse

Die Erfindung betrifft eine Meßanordnung zur Bestimmung der Größe und Größenverteilung von Partikeln in einem Produktstrom.

Bei zahlreichen Produktionsverfahren ist eine Messung der Partikelgrößenverteilung für die Qualitätskontrolle erforderlich. Optimale Ergebnisse werden erzielt, wenn die Messung der Größenverteilung schnell und bei kontinuierlicher Probenahme aus dem Produktstrom erfolgen kann. Im wesentlichen sind vier Meßprinzipien bekannt:

- Siebung und Windsichtung
- Sedimentation
- Zählverfahren
- Optische Verfahren.

Die Auswahl der anzuwendenden Meßverfahren richtet sich nach Größe und Beschaffenheit der zu analysierenden Produkte. Die einzelnen Verfahren unterschieden sich durch ihren Einsatzbereich sowie den erforderlichen technischen Aufwand.

Die geometrische Trennung der Partikel durch Siebung erlaubt in einem weiten Bereich die Aufnahme von Partikelgrößenverteilungen. Nachteilig sind dabei:

-   Meßfehler durch Vorzugsrichtung, sofern die Partikel nicht kugelförmige Gestalt besitzen
-   Verstopfen der Siebmaschen
-   Abrieb von Siebbelägen und vom Produkt
-   Toleranz der Gewebe
-   nur wenige Meßpunkte für die gesamte Verteilung
-   großer technischer Aufwand für kontinuierliche Messungen.

Die Windsichtung ist als physikalisches Trennverfahren von Dichte, Gastemperatur und Partikelform abhängig. Eine kontinuierliche Methode wäre auch hier sehr aufwendig, sofern die gesamte Verteilung zu beschreiben ist.

Sedimentationsverfahren werden vorzugsweise für Partikelanalysen im Größenbereich < 50 $\mu$m eingesetzt. Beispielsweise in der Erz-, Kohle- und Kiesindustrie dient die Sedimentation großtechnisch zur Klassierung, jedoch nicht zur Analyse der anfallenden Produkte.

Zahlverfahren und optische Verfahren, beispielsweise Photonenkorrelationsspektroskopie oder Bildanalyse, sind für Partikelgrößen von 0,05 $\mu$m bis zu großen Abmessungen geeignet. Nachteilig sind jedoch dabei:

- ein sehr eng begrenzter Meßbereich der jeweils verwendeten Geräte
- aufwendige Präparation bzw. hohe Anforderung an die Probenvorbereitung
- Dispergierung in einer Flüssigkeit
- hoher technischer Aufwand für kontinuierliche Messungen.

Zur Vermeidung der vorstehend aufgezeigten Nachteile der bisher üblichen Meßverfahren ist es Aufgabe vorliegender Erfindung, eine technisch möglichst einfache Meßanordnung zur Bestimmung der Größe und Größenverteilung von Partikeln zu entwickeln, die für eine kontinuierliche Probenahme aus einem Produktstrom einsetzbar ist. Die neue Meßanordnung soll insbesondere folgende Anforderungen erfüllen:

- berührungslose, verschleißfreie Messung
- keine Fehler durch Vorzugsrichtung bei nicht kugelformigen Partikeln
- hoher Probendurchsatz
- schnelle, rechnergestützte Auswertung
- Unempfindlichkeit gegenüber Erschütterungen und Verstaubung.

Zur Lösung der Aufgabe wird eine Meßanordnung vorgeschlagen, die gemäß vorliegender Erfindung gekennzeichnet ist durch eine Vereinzelungseinrichtung für die Partikel und eine dieser nachgeordnete Meßzelle, bestehend aus einem Meßkanal mit einem seitlich angeordneten optoelektronischen Sensor sowie durch eine an den Sensor angeschlossene Auswerteeinrichtung zur Bestimmung der Partikelgröße und Größenverteilung.

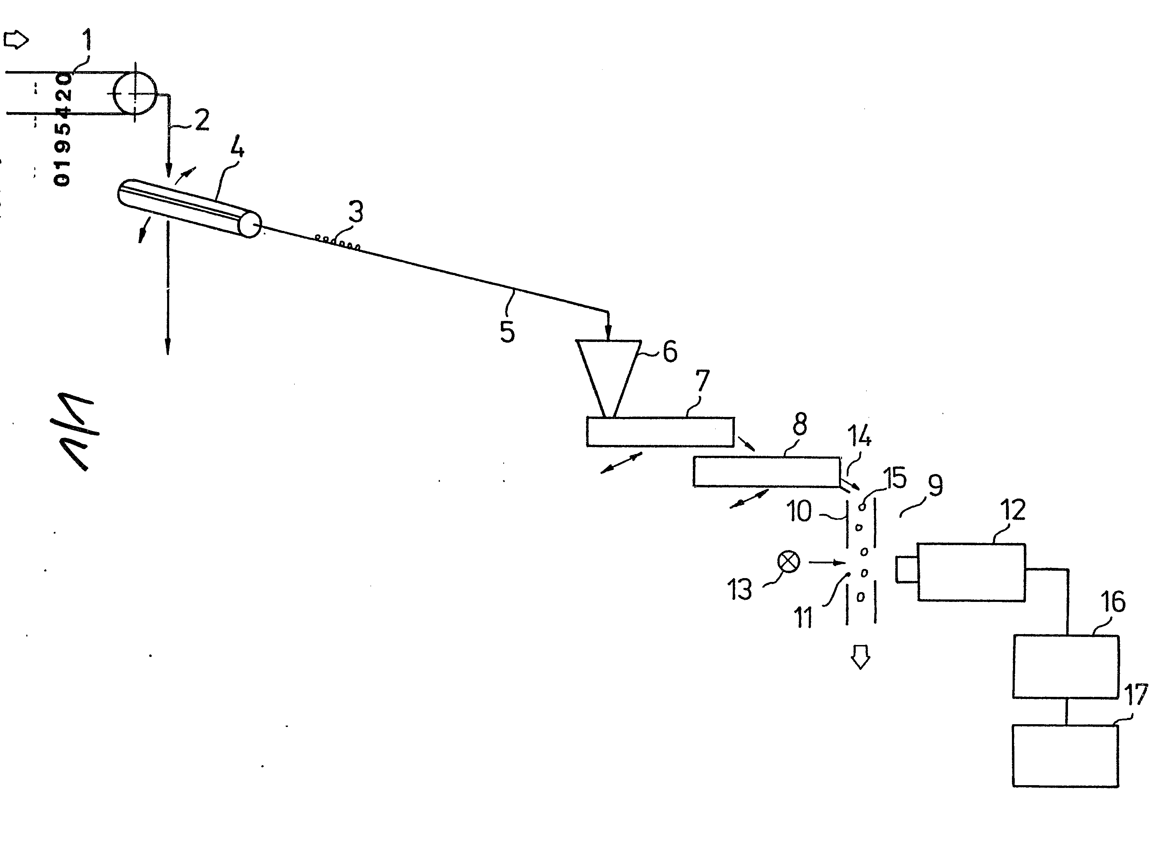

Weitere Einzelheiten und vorteilhafte Ausgestaltungen der erfindungsgemäßen Meßanordnung sind anhand eines in der Zeichnung dargestellten Ausführungsbeispiels nachfolgend beschrieben.

Aus einem mittels einer Fördereinrichtung 1 herangeführten Produktstrom 2 körnigen Guts wird kontinuierlich oder in regelmäßig wiederkehrenden Zeitabständen eine Probe 3 entnommen. Die Entnahme erfolgt beispielsweise mit Hilfe eines längsgeschlitzten Rohres 4, das periodisch durch den Produktstrom bewegt wird. Die Probe gelangt über einen Transportweg 5 und einen sich daran anschließenden Trichter 6 auf zwei hintereinander angeordnete Vibrationsrinnen 7 und 8 zum Vereinzeln und Transport der Partikel der Probe. Die Vereinzelung kann selbstverständlich auch durch andere geeignete Einrichtungen, beispielsweise einen Drehrohrprobenteiler, vorgenommen werden. Die beiden Vibrationsrinnen werden mit unterschiedlicher Fördergeschwindigkeit betrieben, um zwischen den einzelnen Partikeln in Transportrichtung einen Abstand zu erzeugen.

An die Vereinzelungseinrichtung 7, 8 schließt sich eine Meßzelle 9 an, die aus einem vertikalen Meßkanal 10 in Form eines Rohres, einem seitlich in Höhe einer durchgehenden Öffnung 11 im Rohr angeordneten optoelektronischen Sensor 12 und einer den Kanal in Richtung auf den Sensor durchleuchtenden Lichtquelle 13 besteht. Als Sensor wird vorzugsweise ein bildverarbeitender CCD-Zeilensensor oder eine Zeilenkamera eingesetzt, bei denen im wesentlichen in monolithischer Integration eine Vielzahl von Photoelementen, beispielsweise 2048 mit jeweils einer Fläche von 13 x 13 $\mu$m, zeilenförmig angeordnet ist, deren durch optische Strahlung generierte elektrische Ladungen durch Steuertakte von einer Speicherzone zur nächsten verschiebbar sind. Nähere Angaben über derartige Sensoren sind in der Fachliteratur oder in den technischen Datenblättern der Hersteller zu finden.

Die aus der zweiten Vibrationsrinne 8 über einen v-förmigen Auslauf 14 einzeln und nacheinander durch den Meßkanal 10 frei fallenden Partikel 15 werden in der Durchlichtbeleuchtung auf dem Sensor abgebildet. Eine mit dem Sensor in Verbindung stehende Auswerteelektronik 16 tastet die aus den Photoelementen, den sog. Pixel, bestehende Zeile mit einer Frequenz ab, beispielsweise mit 5 kHz, bei der das Partikel während seiner Bewegung mehrmals erfaßt wird. Dabei wird die Anzahl der nicht belichteten Pixel gezählt und die höchste Zahl, die dem maximalen Partikeldurchmesser entspricht, registriert. Die Auswerteelektronik bildet daraus zusammen mit der Anzahl der gemessenen Partikel die Partikelgrößenverteilung. Geeignete Auswerteeinrichtungen sind handelsübliche Computer oder Prozeßrechner. An die Auswerteeinrichtung 16 ist eine Ausgabeeinheit 17, beispielsweise ein Drucker, angeschlossen.

Als Lichtquelle 13 eignen sich besonders solche, die quasi paralleles Gleichlicht erzeugen. Die Messungen sind aber auch mit divergentem oder konvergentem Licht durchführbar. Zur Vermeidung von Fremdlichteinfluß kann auch mit Infrarotlicht, monochromatischem Licht oder Wechsellicht, welches vorteilhafterweise mit der Abtastfrequenz synchronisiert ist, gearbeitet werden. Auf eine Lichtquelle kann unter Umständen verzichtet werden, wenn die zu analysierenden Partikel Eigenstrahlung besitzen. Ebenso kann Reflexion der Partikel genutzt werden. Für die beiden letzten Fälle ist jedoch zwischen Meßkanal 10 und Sensor 12 eine Optik anzuordnen, mit der ein scharfes Bild des Partikels auf dem Sensor erzeugt wird.

0195420

In bestimmten Fällen kann es notwendig sein, die zu analysierenden Partikel durch einen Formfaktor noch feiner zu unterscheiden. Hierzu werden zwei oder auch mehrere Zeilensensoren oder Zeilenkameras in einem definierten Winkel, vorzugsweise im rechten Winkel, zueinander angeordnet.

Versuche im technischen Maßstab haben gezeigt, daß mit der erfindungsgemäßen Meßanordnung bei hohem Probendurchsatz genaue und reproduzierbare Analysenergebnisse nicht nur bei kugelförmigen Partikeln, sondern auch bei unregelmäßig geformten Partikeln, wie Düngemittel- oder Kunststoffgranulat, erhalten werden.

Patentansprüche

1. Meßanordnung zur Bestimmung der Größe und Größenverteilung von Partikeln in einem Produktstrom, gekennzeichnet durch eine Vereinzelungseinrichtung (7, 8) für die Partikel und eine dieser nachgeordnete Meßzelle (9), bestehend aus einem Meßkanal (10) mit einem seitlich angeordneten optoelektronischen Sensor (12), sowie durch eine an den Sensor angeschlossene Auswerteeinrichtung (16) zur Bestimmung der Partikelgröße und Größenverteilung.

2. Meßanordnung nach Anspruch 1, dadurch gekennzeichnet, daß dem Sensor (12) eine den Meßkanal (10) durchleuchtende Lichtquelle (13) zugeordnet ist.

3. Meßanordung nach Anspruch 1, dadurch gekennzeichnet, daß bei Licht reflektierenden oder Licht emittierenden Partikeln zwischen dem Meßkanal (10) und dem Sensor (12) eine Optik angeordnet ist.

4. Meßanordnung nach Anspruch 1 bis 3, dadurch gekennzeichnet, daß die Vereinzelungseinrichtung aus einer oder mehreren hintereinander angeordneten Vibrationsrinnen (7, 8) besteht.

5. Meßanordnung nach Anspruch 1 bis 4, dadurch gekennzeichnet, daß der Sensor (12) ein bildverarbeitender CCD-Zeilensensor oder eine Zeilenkamera ist, deren Abtastfrequenz so gewählt ist, daß ein im freien Fall vor der Sensorzeile sich bewegendes Partikel (15) in aufeinanderfolgenden Abschnitten erfaßt wird.

6. Meßanordnung nach Anspruch 1 bis 5, dadurch gekennzeichnet, daß zur Bestimmung eines Formfaktors der zu erfassenden Partikel (15) zwei oder mehrere Zeilensensoren oder Zeilenkameras (12) in einem definierten Winkel, vorzugsweise im rechten Winkel, zueinander angeordnet sind.

Zeichn.

1/1

0195420